# EUROPEAN PATENT SPECIFICATION

(11) **EP 1 532 036 B1**
(45) Date of publication and mention of the grant of the patent: **06.12.2006**
(21) Application number: 03738808.9
(22) Date of filing: 03.06.2003
(51) Int. Cl.: B62D 21/15, B62D 33/067, F16B 31/00

(54) **VEHICLE COMPRISING DEFORMABLE JOINT, AND A DEFORMATION STRUCTURE WHICH CAN BE USED IN A CAB BRACKET**
FAHRZEUG MIT VERFORMBARER VERBINDUNG UND IN KABINENKONSOLE VERWENDBARE VERFORMUNGSKONSTRUKTION
STRUCTURE DE DEFORMATION ET VEHICULE A JOINT DEFORMABLE

(30) Priority: 03.06.2002 SE 0201687
(43) Date of publication of application: 25.05.2005
(73) Proprietor: VOLVO LASTVAGNAR AB, 405 08 Göteborg (SE)
(72) Inventor: BODIN, Jan-Olof, S-441 65 Alingsas (SE); TENHUNEN, Raimo, S-471 60 Myggenäs (SE); GRANÄNG, Ulf, S-442 41 Kungälv (SE); STRÖMBERG, Sten, S-411 31 Göteborg (SE); COGNELL, Björn, S-414 72 Göteborg (SE)
(74) Representative: Ekström, Nils
(86) International application number: PCT/SE2003/000904
(87) International publication number: WO 2003/101809

(56) References cited:
- EP-A2- 0 972 700
- WO-A1-02/47960
- DE-C1- 10 037 889
- US-A- 4 448 561
- DATABASE WPI Week 200147, Derwent Publications Ltd., London, GB; Class Q22, AN 2001-437278, XP002985163 & JP 2001 151162 A (HINO MOTORS LTD) 05 June 2001
- DATABASE WPI Week 199907, Derwent Publications Ltd., London, GB; Class Q22, AN 1999-075941, XP002985164 & JP 10 316 013 A (HINO MOTORS LTD) 02 December 1998
- DATABASE WPI Week 199936, Derwent Publications Ltd., London, GB; Class Q22, AN 1999-424260, XP002985165 & JP 11 171 054 A (HINO MOTORS LTD) 29 June 1999
- DATABASE WPI Week 200228, Derwent Publications Ltd., London, GB; Class Q51, AN 2002-220649, XP002985166 & JP 2001 248408 A (TOSHIBA KK) 14 September 2001
- DATABASE WPI Week 200213, Derwent Publications Ltd., London, GB; Class Q22, AN 2002-094390, XP002985167 & JP 2001 334943 A (KOYO SEIKO CO LTD) 04 December 2001

## Description

### TECHNICAL FIELD

The invention relates to a vehicle according to the preamble of patent claim 1. In particular, the invention relates to a vehicle comprising a chassis which supports a cab via a cab bracket, where the cab is intended, in the event of collision from the front, to be displaced backward while rotation of the cab bracket around a swivel joint and deformation of a deformable joint take place. The invention also relates to a deformation structure according to the preamble of patent claim 11. In particular, the invention relates to a deformation structure comprising a rigid bracket to which a deformable plate is fastened via a bolt, where the deformation structure allows the plate to be separated from the rigid bracket while relative movement takes place in relation to an axial and radial direction of said bolt.

### BACKGROUND ART

For the purpose of reducing the force stress for driver and passenger(s) and for the purpose of reducing the aggressiveness of the vehicle in relation to external objects in the event of collision, use is made of deformation structures. Deformation structure means a structure which is intended to be deformed at a given load when exposed to an impulse, for example generated by a collision. Deformation structures are used in order to make rigid structures softer from a collision aspect and where appropriate in order to separate two elements fastened to one another at a given force. This invention relates to a deformation structure which is intended to separate two elements fastened to one another at a given force.

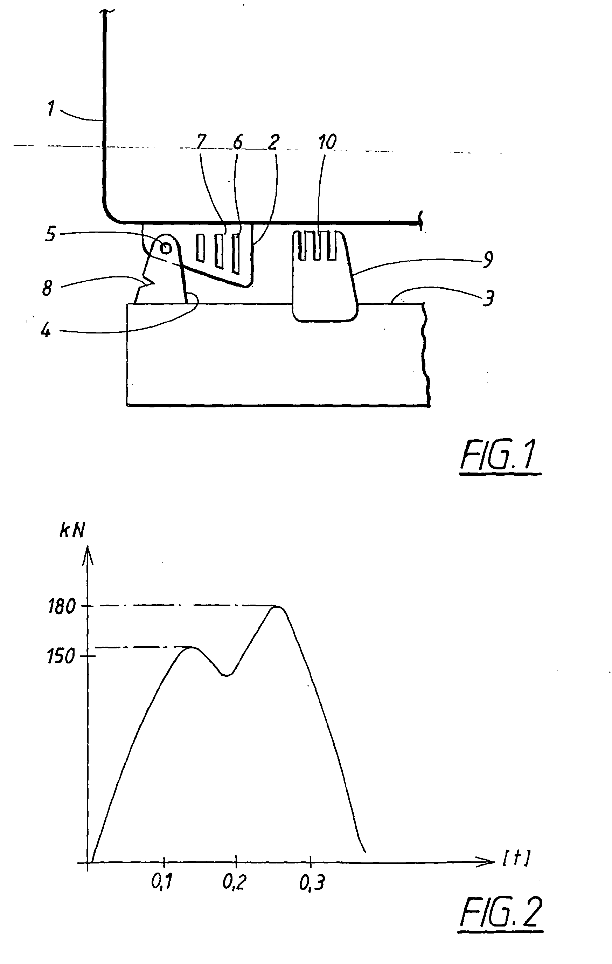

JP 8268347 discloses an example of a vehicle comprising a deformation structure which is used in a tiltable driver cab. The vehicle, which is shown diagrammatically in Figure 1, comprises a cab 1 which is supported by a frame 3 via an upper bracket 2 which is fastened to the cab and is connected rotatably to a lower bracket 4 fastened to the frame. The lower bracket has a break indication 8, the cab 1 being freed from the frame 3 during a collision and striking a stop element 9. One problem with the deformation structure according to JP 8268347 is that the cab is freed completely from the frame, which reduces the possibility of controlling the process. Another problem is that the force profile during separation is controlled by a break indication designed in the lower bracket. As the lower bracket is a bearing structure for the cab, it is more difficult to optimize the force at which the bracket gives way. This is due to the fact that the bracket has to meet the requirement of on the one hand sufficient rigidity, because it is a bearing structure, and on the other hand sufficient weakness, because the bracket has to break during a collision sequence. The use of break indications in brackets also gives rise to problems relating to fatigue failure. Great stress concentrations arise in the break indication and, because the bracket is a bearing structure, the loading is normally high.

Figure 2 shows the force stress of a cab bracket during a normal collision sequence. The curve shows a first peak corresponding to the situation where the fastenings of the cab give way and the cab is allowed to be displaced backward, and a second peak corresponding to the colliding object striking the more rigid frame structure. In order to ensure that the force stress on the cab and the object which has collided with the cab is limited, it is necessary that the deformation structure can be designed in a simple and controllable way in order to give way at a given load below maximum force stress during the collision sequence, which has been exemplified by the first and the second peak in Figure 2.

Use is also made today of vehicles according to the preamble of patent claim
1. These vehicles comprise in a conventional manner a chassis and a cab which is supported on said chassis and at its lower end has a bearing plate which is fastened to a cab bracket. Cab bracket means a bracket which supports the cab. The cab bracket is arranged with a swivel joint. The cab bracket and the bearing plate are anchored to one another via, in the direction of the vehicle, a front rigid joint and at least one rear deformable joint, said cab being intended, in the event of collision in the direction from the front, to be displaced backward while rotation of the cab bracket around its swivel joint and deformation of the at least one rear deformable joint take place. The rear deformable joint comprises a bolt which is fastened to said bracket and passes through a lead-through arranged in a deformable area of said bearing plate, where the geometry of the lead-through is such that it fixes said bolt in a radial direction at right angles to a longitudinal axis through the bolt, where said bolt has a projection, in the form of a head, washer or nut, which bears against said deformable area of the plate for fixing the plate in the axial direction.

One problem with this known joint is that it does not give way at sufficiently small force stresses, which results in the intended force-absorbing effect not being brought about by the joint.

### BRIEF DESCRIPTION OF THE INVENTION

One object of the invention is to provide a vehicle comprising a deformation structure by means of which the abovementioned problems are solved. A particular object of the invention is to provide a vehicle comprising a cab bracket having a deformable joint which can be modified in a simple way in order to obtain the intended deformation force. Deformation force means the force at which the deformation structure gives way.

These objects are achieved by a vehicle according to the characterizing part of patent claim 1. By virtue of assigning to a cab bracket a front rigid joint and at least one rear deformable joint, said cab being intended, in the event of collision in the direction from the front, to be displaced backward while rotation of the cab bracket around a swivel joint and deformation of the at least one rear deformable joint take place, it is ensured that the cab is never completely freed from the cab bracket.

The rear deformable joint according to the invention comprises a bolt which is fastened to said cab bracket and passes through a lead-through arranged in a deformable area of a bearing plate forming part of the cab, where the geometry of the lead-through is such that it fixes said bolt in a radial direction at right angles to a longitudinal axis through the bolt. The bolt also has a projection, in the form of a head, washer or nut, which bears against said deformable area of the plate for fixing the plate in the axial direction of the bolt. Deformable area means that the plate has such a thickness in this area that it gives way during a collision.

By designing the lead-through with an edge area with central portions, which define an inscribed circle with a diameter substantially corresponding to the diameter of the bolt, and peripheral portions, which extend radially outside said central portions, it is ensured that the plate is fixed under normal loading, that is to say in the absence of collision conditions, and that separation of the plate from the cab bracket is permitted at a predetermined force level.

By virtue of its design, simple adaptation of the magnitude of the force necessary for separation between the plate and the cab bracket is permitted. The adaptation is brought about by virtue of the distance from the peripheral portions located farthest out from the center of the lead-through being varied and also the width of the central portions being varied. The wider the central portions, the greater the separation force required. As far as the distance of the peripheral portions from the center of the lead-through is concerned, the greater this distance is, the smaller the separation force required. The deformation structure can therefore be designed in order to provide the intended separation force by experience-based modification of the design of the lead-through with regard to the depth of the peripheral portions and also the width of the central portions which make bearing contact. By regarding the central portions which make bearing contact as beam elements which extend from those points of the peripheral portions located radially farthest out, it is also possible to calculate the necessary bending force of the lips which make bearing contact with knowledge of the thickness and modulus of elasticity of the plate.

A particular object of the invention is to provide a deformation structure which affords a good possibility for modifying the intended deformation force, which means the force at which the deformation structure gives way. This object is achieved by a deformation structure according to the characterizing part of patent claim 11.

Preferred embodiments are indicated in the dependent patent claims.

### BRIEF DESCRIPTION OF DRAWING FIGURES

An embodiment of the invention will be described in greater detail below with reference to accompanying drawing figures, in which:
- Fig. 1: shows a cab supported by a cab bracket according to the prior art;
- Fig. 2: shows a typical force/time diagram for a normal collision sequence;
- Fig. 3: shows a vehicle comprising a cab bracket and a bearing plate of a cab which are anchored to one another via, in the direction of the vehicle, a front rigid joint and at least one rear deformable joint according to the invention;
- Fig. 4: shows a side view of a deformation structure according to the invention;
- Fig. 5: shows the bearing plate seen from above;
- Fig. 6: shows in detail a lead-through according to the invention;
- Fig. 7: shows a deformation structure according to the invention in cross section, and
- Fig. 8: shows the vehicle in Figure 3 after deformation has taken place.

### DESCRIPTION OF ILLUSTRATIVE EMBODIMENTS

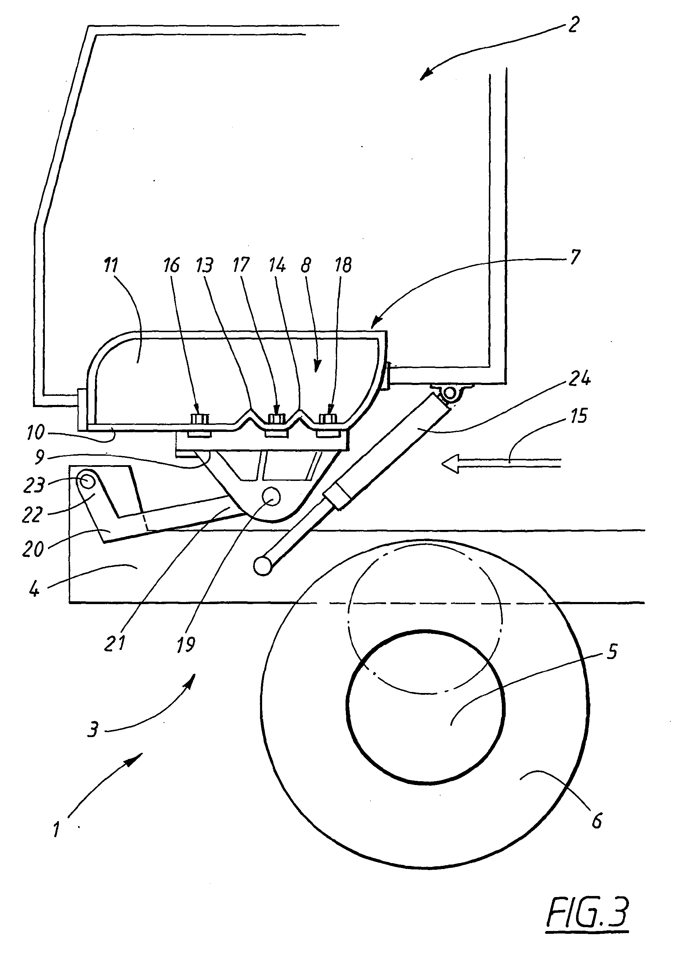

Figure 3 shows a vehicle 1 of conventional type comprising a cab 2 which is supported by a chassis 3 comprising a frame 4 which supports a set of wheel axles 5 which support respective wheel pairs 6. At a lower end 7, the cab 2 has a bearing plate 8. The bearing plate 8 is fastened to a cab bracket 9. In the embodiment shown, the bearing plate 8 has an essentially vertical portion 11 and an essentially horizontal portion 10. The vertical portion and the horizontal portion are joined at a fold line 12. A stress concentration arises at this fold line 12. In order to reduce the risk of crack propagation along the fold line, the horizontal portion 10 of the bearing plate is provided with projections in the form of triangular ridges 13, 14. The triangular ridges 13, 14 also give the horizontal portion 10 increased torsional rigidity.

The cab bracket 9 and the bearing plate 8 are anchored to one another via, in the longitudinal direction 15 of the vehicle, a front rigid joint 16 and two deformable rear joints 17, 18. According to the invention, the cab bracket 9 and the bearing plate 8 can be connected by any number of deformable joints 17, 18. Rigid joint means a joint which is designed not to give way at the forces to which the joint is subjected during a well-defined collision sequence, and deformable joint means a joint which is designed to give way during a well-defined crash sequence. For the crash sequence shown in Figure 2, it is suitable for the deformable joint to give way at a force of less than 150 kN, suitably less than 125 kN. In a crash sequence shown according to Figure 2, the rigid joint is not to give way at either of the two peaks and should therefore not give way at forces of less than 180 kN, suitably of less than 200-300 kN. From a given measured force/time diagram, a skilled person in the field can determine suitable levels at which component deformation structures should give way.

The cab bracket is also mounted in a swivel joint 19. In the embodiment shown, the swivel joint 19 is connected to the frame 4 of the chassis 3 via a link arm 20. The link arm 20 has a first end 21 which is interconnected with the swivel joint 19 of the cab bracket. The link arm also has a second end 22 which has a second swivel joint 23 by means of which the second end 22 is fastened in an articulated manner to the frame 4 of the chassis. Tilting of the cab 2 is permitted while the link arm 20 rotates around the second swivel joint 23. A hydraulic cylinder 24 is arranged between the frame 4 and the cab 2 for carrying out tilting of the cab 2.

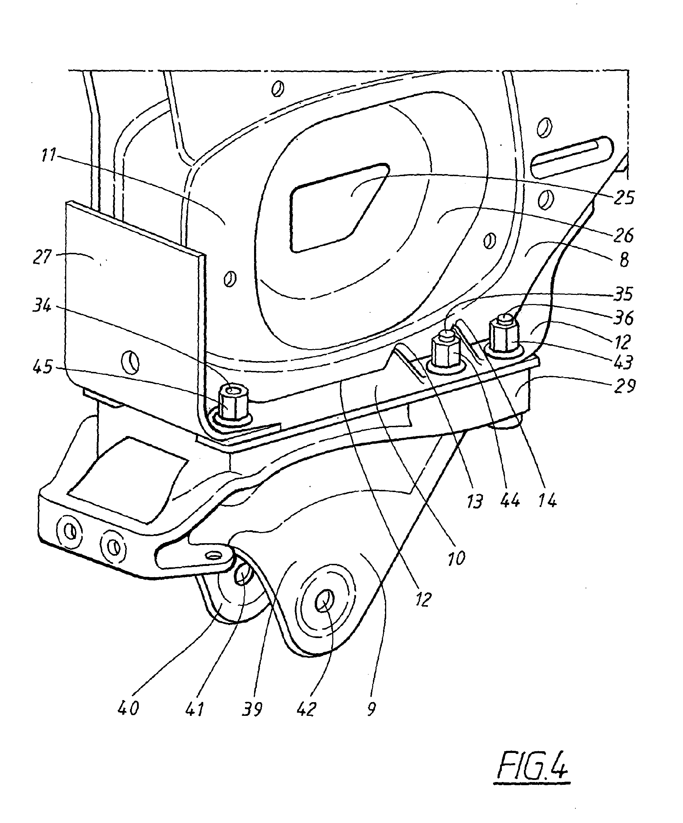

Figure 4 shows a perspective illustration of the cab bracket 9 and the bearing plate 8 in detail. The bearing plate has a substantially plane vertical portion 11 which is connected to an essentially horizontal portion 10 via a fold line 12. The vertical portion 10 has a cutout 25 formed in a recess 26.

Furthermore, an angle-iron 17 is arranged in a front portion 28 of the horizontal portion 10. The angle-iron is intended to connect the bearing plate 8 to other structural parts which form part of the complete cab 2.

The cab bracket 9 is formed by a substantially plane portion 29 which has an upper surface 30 which bears against a lower surface 31 of the horizontal portion 10 of the bearing plate 8. In the embodiment shown, the plane portion 29 has lead-throughs 32 through which the shanks 33 of bolts 34-36 extend. The plane portion 29 also has a lower surface 37 against which the head 38 of each of the bolts 34-36. Alternatively, instead of the head 38, a nut can be screwed onto a bolt extending through the plane portion 29. In a further alternative embodiment, the lead-throughs 32 of the plane portion have a thread in which the bolts 34-36 can be fastened directly. Two vertically projecting, substantially triangular projections 39, 40, arranged parallel, extend from the substantially plane portion 29. The triangular projections 39, 40 have a respective lead-through 41, 42, which lead-throughs are arranged axially and are used for forming the swivel joint 19. According to the embodiment shown, the bearing plate 8 is fixed to the cab bracket 9 with the aid of projections in the form of nuts 43-45. In an alternative embodiment, the bolts 34-36 can instead be designed with a respective head intended to bear against the upper surface 46 of the horizontal portion 10.

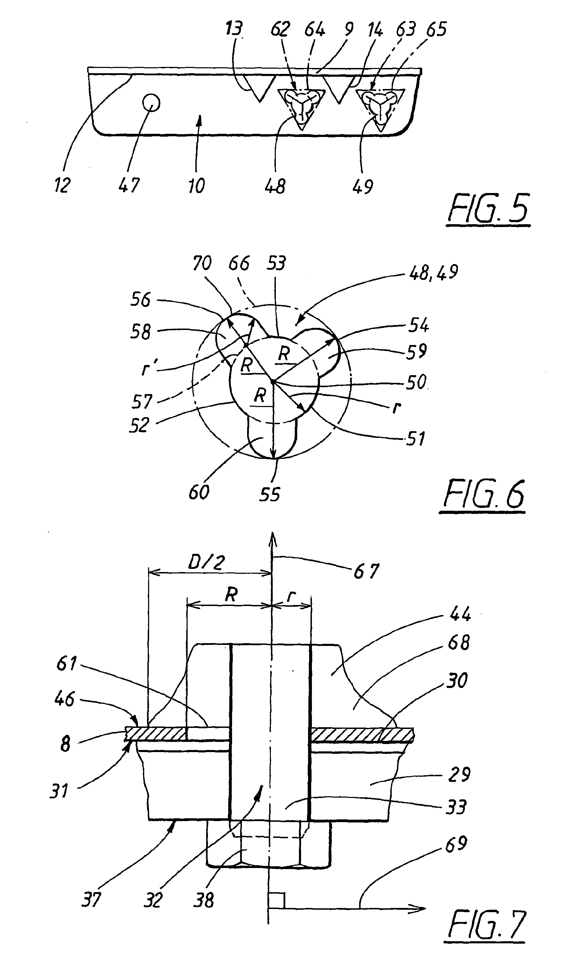

Figure 5 shows a view from above of the bearing plate 8 with the horizontal portion 10. The plate 8 has a first front lead-through 47 and two rear lead-throughs 48, 49. The front lead-through forms part of a front rigid joint which is formed by the lead-through 47 in the plate 8, the bolt 35, the lead-through in the plane portion 29, the head 38 of the bolt and a nut 43. The lead-through 47 has a diameter which is adapted to the diameter of the shank of the bolt 35. The diameter of the lead-through is slightly greater than the diameter of the shank without unnecessary play being permitted. Radial and axial fixing is therefore brought about by virtue of the nut 43 being tightened with a suitable torque.

The rear lead-throughs 48, 49 form part of two rear deformable joints which are formed by the lead-throughs 48, 49 in the plate 8, the bolts 36, 37, the lead-throughs in the plane portion 29, the head 38 of the bolts and the nuts 44, 45. These lead-throughs are arranged in a deformable area of the bearing plate 8.

In the embodiment shown, the rear lead-throughs 48, 49 have peripheral portions which are inscribed in a triangle 62, 63. According to the above description, the bearing plate has a fold line 12 which separates the substantially vertical portion 11 and the substantially horizontal portion 10. The triangles 62, 63 have a base surface 64, 65 which faces said fold line 12 and is arranged substantially parallel to the fold line 12. Owing to the selected, none of the indentations 58-60 is directed toward the fold line, as a result of which the stress concentration which arises at the fold line is not superimposed with the stress concentration which is formed at the indentations. The configuration therefore contributes to making the construction less susceptible to fatigue failure.

Figure 6 shows a lead-through 48, 49 of the deformable joint in detail. The lead-through 48, 49 has an edge area 50 with central portions 51-53, which define an inscribed circle with a diameter r substantially corresponding to the diameter of the bolt, and peripheral portions 54-56, which extend radially outside said central portions. The edge area 50 is therefore formed by an inner circle 57 which is penetrated by a number of indentations 58-60. The central portions 51-53 are arranged so as to fix the bolt in the radial direction 69 at right angles to the longitudinal axis 67 of the bolt. The peripheral portions 54-56 extend to a maximum radial distance R from the center point of the inner circle 57. In one embodiment, the indentations 58-60 have a periphery 70 which consists of half or a smaller part of a circular arc with the radius r'. In an advantageous embodiment, three indentations are provided, the lead-through 48, 49 being of substantially three-leaf-clover shape. In the area around the edge area 50, the bearing plate 8 forms a deformable area 66. In Figure 6, the deformable area is indicated symbolically by a dot/dash circle. The deformable area 66 corresponds substantially to the area where the nuts 44, 45 bear against the plate. When a collision occurs, the nuts will be pulled through the bearing plate while great deformation of the deformable area 66 takes place.

The ratios r/R and L/2πr, where L is the total length of the central portions 51-53, determine qualitatively the magnitude of the deformation force, which means the force at which the deformation structure gives way. Small values of the ratios correspond to low deformation forces.

In the example shown, r/R = 1/2. This reduces the deformation force from 176 kN for a completely round hole to 125 kN, in the case of a 3 mm thick plate using a lead-through with the dimensions r = 12 mm and R = 22 mm, and a nut with a contact diameter D = 22.1 mm just greater than R. A suitable range for the ratio r/R lies between 1/1.1 and 1/4.

Figure 7 shows in cross section a bolt 33 which is fastened to the plane portion 29 of the cab bracket 9. The bolt 33 is anchored via a projection 68. The projection can be formed by a head, a washer or a nut 44, 45. In the embodiment shown, the projection consists of a nut 44 which has a contact surface which consists of a lower surface 61 facing the upper surface 46 of the plate. The lower surface 61 of the nut 35 has a diameter D which is greater than the radius r of the central portions in the lead-through 47, 48. The diameter D is preferably greater than the radius R of the peripheral portions of the lead-throughs 47, 48, which leads to dirt effectively being prevented from penetrating, as a result of which the risk of corrosion is reduced. The bolt has an extension along a longitudinal axis, which is indicated by the arrow 67.

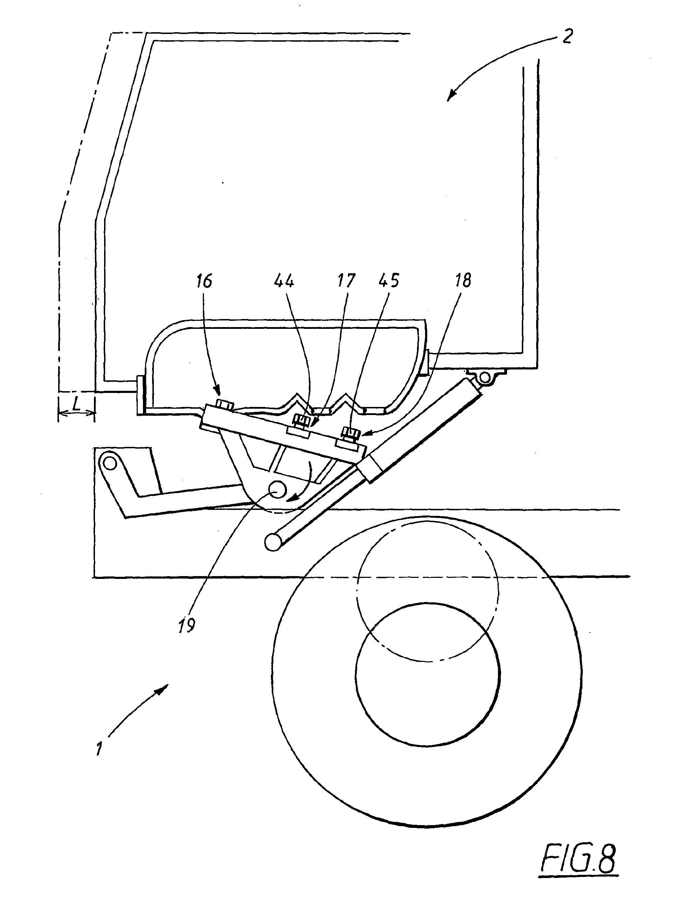

Figure 8 shows the vehicle in Figure 3 after deformation has taken place. Only the changes which have taken place in relation to the situation described in Figure 3 will be described below.

The cab 2 has been moved backward in the longitudinal direction of the vehicle by the distance L. The rigid joint 16 is still anchored in the horizontal portion 10 of the bearing plate 8. The deformable joints 17, 18 have come away from the horizontal portion 10 of the bearing plate 8 by virtue of the nuts 44, 45 having passed through the plate 8. The cab bracket 9 has been rotated around the swivel joint 19. The horizontal portion 10 of the bearing plate 8 has therefore been deformed slightly in an area around the fastening of the rigid joint 16.

The deformable joints can be used in locations other than in a cab bracket. The invention therefore also relates to a deformation structure comprising a rigid bracket and a bolt which is fastened to said bracket and passes through a lead-through arranged in a deformable plate, where the geometry of the lead-through is such that it fixes said bolt in a radial direction at right angles to a longitudinal axis through the bolt, where said bolt has a projection, in the form of a head, washer or nut, which bears against said plate for fixing the plate in the axial direction. The lead-through has an edge area with central portions, which define an inscribed circle with a diameter substantially corresponding to the diameter of the bolt, and peripheral portions, which extend radially outside said central portions.

The invention is not to be limited to the embodiments indicated above but can be varied freely within the scope of the following patent claims.

## Claims

1. A vehicle (1) comprising a chassis (3) and, supported on said chassis (3), a cab (2) with a bearing plate (8) which is fastened to a cab bracket (9) having a swivel joint (19), where said cab bracket (9) and bearing plate (8) are anchored to one another via, in the direction of the vehicle, a front rigid joint (16) and at least one rear deformable joint (17, 18), said cab (2) being intended, in the event of collision in the direction from the front, to be displaced backward while rotation of the cab bracket (9) around its swivel joint (19) and deformation of the at least one rear deformable joint (17, 18) take place, which rear deformable joint comprises a bolt (35, 36) which is fastened to said cab bracket (9) and passes through a lead-through (47, 48) arranged in a deformable area (66) of said bearing plate (8), where the geometry of the lead-through (47, 48) is such that it fixes said bolt (35, 36) in a radial direction (69) at right angles to a longitudinal axis (67) through the bolt (47, 48), where said bolt (35, 36) has a projection (68) which bears against said deformable area of the plate (8) for fixing the bearing plate (8) along the longitudinal axis of the bolt, **characterized in that** said lead-through (47, 48) has an edge area (50) with central portions (51-53), which define an inscribed circle (57) with a diameter substantially corresponding to the diameter of the bolt, and peripheral portions (54-56), which extend radially outside said central portions.

2. Vehicle according to claim 1, **characterized in that** the cab bracket (9) is, via its swivel joint (19), fastened in an articulated manner to a first end (21) of a link arm (20), the other end (22) of which is, in a second swivel joint (23), fastened in an articulated manner to said chassis (3), tilting of the cab (2) being permitted while said link arm (2) rotates around said second swivel joint (23).

3. Vehicle according to claim 1 or 2, **characterized in that** said peripheral portions (54-56) have a radial extent which is smaller than the radius of a contact surface (61) of said projection (68) directed toward said bearing plate (8).

4. Vehicle according to claim 1, 2 or 3, **characterized in that** said edge area (50) is formed by an inner circle (57) which is penetrated by a number of indentations (58-60).

5. Vehicle according to claim 4, **characterized in that** said indentations (58-60) have a periphery (70) which consists of half or a smaller part of a circular arc.

6. Vehicle according to claim 4 or 5, **characterized in that** the number of indentations is three.

7. Vehicle according to any one of claims 1-6, **characterized in that** the lead-through (47, 48) is of substantially three-leaf-clover shape.

8. Vehicle according to claim 6 or 7, where said peripheral portions are inscribed in a triangle (62) and said bearing plate (8) has a fold line (12) which separates a substantially vertical portion (11) and a substantially horizontal portion (10), where the horizontal portion (10) comprises said lead-through (47, 48), **characterized in that** said triangle (62, 63) has a base surface (64, 65) which is directed toward said fold line (12) and is arranged substantially parallel to the fold line (12).

9. Vehicle according to any one of claims 1-8, **characterized in that** the cab bracket (9) and the bearing plate (8) are anchored to one another via two rear deformable joints (17, 18).

10. Vehicle according to claim 9, **characterized in that** said bearing plate (8) has a ridge (14) extending substantially in the transverse direction of the vehicle and positioned in the longitudinal direction of the vehicle between said two rear deformable joints (17, 18), crack propagation between lead-throughs (47, 48) assigned to said deformable joints being impeded.

11. A deformation structure comprising a rigid bracket (9) and a bolt (35, 36) which is fastened to said bracket (9) and passes through a lead-through (47, 48) arranged in a deformable plate (8), where the geometry of the lead-through (47, 48) is such that it fixes said bolt (35, 36) in a radial direction at right angles to a longitudinal axis through the bolt, where said bolt (35, 36) has a projection (68) which bears against said plate (8) for fixing the plate in the axial direction, **characterized in that** said lead-through (47, 48) has an edge area (50) with central portions (51-53), which define an inscribed circle (57) with a diameter substantially corresponding to the diameter of the bolt, and peripheral portions (54-56), which extend radially outside said central portions.

12. Deformation structure according to claim 11, **characterized in that** said peripheral portions (54-56) have a radial extent which is smaller than the radius of a contact surface (61) of said projection directed toward said plate.

13. Deformation structure according to claim 11 or 12, **characterized** i n that said edge area (50) is formed by an inner circle which is penetrated by a number of indentations (58-60).

14. Deformation structure according to claim 13, **characterized in that** said indentations (58-60) have a periphery which consists of half or a smaller part of a circular arc.

15. Deformation structure according to claim 13 or 14, **characterized** i n that the number of indentations is three.

16. Deformation structure according to any one of claims 11-15, **characterized in that** the lead-through (47, 48) is of substantially three-leaf-clover shape.

## Patentansprüche

1. Fahrzeug (1) mit einem Chassis (3) und einer an diesem Chassis (3) abgestützten Kabine (2) mit einer Lagerplatte (8), die an einer Kabinenhalterung (9) befestigt ist, die ein Schwenkgelenk (19) aufweist, wobei die Kabinenhalterung (9) und die Lagerplatte (8) miteinander über eine in der Richtung des Fahrzeugs vordere, starre Verbindung (16) und mindestens eine hintere deformierbare Verbindung (17, 18) verbunden sind, wobei die Kabine (2) in dem Fall eines Zusammenstoßes in der Richtung von vorn nach hinten verschoben werden soll, während eine Drehung der Kabinenhalterung (9) um ihr Schwenkgelenk (19) und eine Deformation der mindestens einen hinteren deformierbaren Verbindung (17, 18) stattfindet, wobei die hintere deformierbare Verbindung eine Schraube (35, 36) umfasst, die an der Kabinenhalterung (9) befestigt ist und durch eine Hindurchführung (47, 48) hindurchgeführt ist, die in einem deformierbaren Bereich (66) der Lagerplatte (8) angeordnet ist, wobei die geometrische Gestaltung der Hindurchführung (47, 48) eine solche ist, dass sie die Schraube (35, 36) in radialer Richtung (69) unter einem rechten Winkel zu einer Längsachse (67) durch die Schraube (35, 36) fixiert, wobei die Schraube (35, 36) einen Vorsprung (68) aufweist, der zum Fixieren der Lagerplatte (8) entlang der Längsachse der Schraube gegen den deformierbaren Bereich der Platte (8) anliegt, **dadurch gekennzeichnet, dass** die Hindurchführung (47, 48) einen Randbereich (50) mit zentralen Abschnitten (51 - 53), die einen Inkreis (57) mit einem Durchmesser, der im Wesentlichen dem Durchmesser der Schraube entspricht, begrenzen, und peripheren Abschnitte (54 - 56) aufweist, die sich radial außenseitig der zentralen Abschnitte erstrecken.

2. Fahrzeug nach Anspruch 1, **dadurch gekennzeichnet, dass** die Kabinenhalterung (9) über ihr Schwenkgelenk (19) in einer angelenkten Weise an einem ersten Ende (21) eines Verbindungs- bzw. Gelenkarms (20) befestigt ist, dessen anderes Ende (22), in einem zweiten Schwenkgelenk (23), in einer angelenkten Weise an dem Chassis (3) befestigt ist, wobei die Kabine (2) verschwenkbar ist, während sich der Verbindungs- bzw. Gelenkarm (20) um das zweite Schwenkgelenk (23) dreht.

3. Fahrzeug nach Anspruch 1 oder 2, **dadurch gekennzeichnet, dass** die peripheren Abschnitte (54 - 56) eine radiale Erstreckung aufweisen, die kleiner ist als der Radius einer Berührungsfläche (61) des Vorsprungs (68), die zu der Lagerplatte (8) hin gerichtet ist.

4. Fahrzeug nach Anspruch 1, 2 oder 2, **dadurch gekennzeichnet, dass** der Randbereich (50) durch einen Inkreis (57) gebildet ist, der von eine Reihe von Einziehungen (58 - 60) durchdrungen ist.

5. Fahrzeug nach Anspruch 4, **dadurch gekennzeichnet, dass** die Einziehungen (58 - 60) einen Umfang (70) aufweisen, der aus einem halben oder kleineren Teil eines Kreisbogens besteht.

6. Fahrzeug nach Anspruch 4 oder 5, **dadurch gekennzeichnet, dass** drei Einziehungen vorgesehen sind.

7. Fahrzeug nach einem der Ansprüche 1 - 6, **dadurch gekennzeichnet, dass** die Hindurchführung (47, 48) im Wesentlichen die Gestalt eines dreiblättrigen Kleeblatts aufweist.

8. Fahrzeug nach Anspruch 6 oder 7, **dadurch gekennzeichnet, dass** die peripheren Abschnitte durch ein Dreieck (62) umschrieben sind und die Lagerplatte (8) eine Faltlinie (12) aufweist, die einen im Wesentlichen vertikalen Abschnitt (11) und einen im Wesentlichen horizontalen Abschnitt (10) aufweist. wobei der horizontale Abschnitt (10) die Hindurchführung (47, 48) aufweist, **dadurch gekennzeichnet, dass** das Dreieck (62, 63) eine Basisfläche (64, 65) aufweist, die zu der Faltlinie (12) hin gerichtet ist und im Wesentlichen parallel zu der Faltlinie (12) angeordnet ist.

9. Fahrzeug nach einem der Ansprüche 1 - 8, **dadurch gekennzeichnet, dass** die Kabinenhalterung (9) und die Lagerplatte (8) über zwei hintere deformierbare Verbindungen (17,18) mit einander verbunden sind.

10. Fahrzeug nach Anspruch 9, **dadurch gekennzeichnet, dass** die Lagerplatte (8) einen Rand (14) aufweist, der sich im Wesentlichen in Querrichtung des Fahrzeugs erstreckt und in Längsrichtung des Fahrzeugs zwischen den beiden hinteren deformierbaren Verbindungen (17, 18) angeordnet ist, wobei eine Rissfortpflanzung zwischen den Hindurchführungen (47, 48), die zu den deformierbaren Verbindungen gehören, behindert bzw. erschwert ist.

11. Deformationsstruktur mit einer starren Halterung (9) und einer Schraube (35, 36), die an der Halterung (9) befestigt und durch eine Hindurchführung (47, 48) hindurchgeführt ist, die in einer deformierbaren Platte (8) angeordnet ist, wobei die Geometrie der Hindurchführung (47, 48) eine solche ist, dass sie die Schraube (35, 36) in radialer Richtung unter einem rechten Winkel zu einer Längsachse durch die Schraube fixiert, wobei die Schraube (35, 36) einen Vorsprung (68) aufweist, der gegen die Platte (8) zur Fixierung der Platte in axialer Richtung anliegt, **dadurch gekennzeichnet, dass** die Hindurchführung (47, 48) einen Randbereich (50) mit zentralen Abschnitten (51 - 53), die einen Inkreis (57) mit einem Durchmesser, der im Wesentlichen dem Durchmesser der Schraube entspricht, begrenzen, und periphere Abschnitte (54 - 56) aufweist, die sich radial außenseitig der zentralen Abschnitte erstrecken.

12. Deformationsstruktur nach Anspruch 11, **dadurch gekennzeichnet, dass** die peripheren Abschnitte (54 - 56) eine radiale Erstreckung aufweisen, die kleiner ist als der Radius einer Berührungsfläche (61) des Vorsprungs (68), die zu der Lagerplatte (8) hin gerichtet ist.

13. Deformationsstruktur nach Anspruch 11 oder 12, **dadurch gekennzeichnet, dass** der Randbereich (50) durch einen Inkreis (57) gebildet ist, der von eine Reihe von Einziehungen (58 - 60) durchdrungen ist.

14. Deformationsstruktur nach Anspruch 13, **dadurch gekennzeichnet, dass** die Einziehungen (58 - 60) einen Umfang (70) aufweisen, der aus einem halben oder kleineren Teil eines Kreisbogens besteht.

15. Deformationsstruktur nach Anspruch 13 oder 14, **dadurch gekennzeichnet, dass** drei Einziehungen vorgesehen sind.

16. Deformationsstruktur nach einem der Ansprüche 1 - 15, **dadurch gekennzeichnet dass** die Hindurchführung (47, 48) im Wesentlichen die Gestalt eines dreiblättrigen Kleeblatts aufweist.

## Revendications

1. Véhicule (1) comportant un châssis (3) et, supportée sur ledit châssis (3), une cabine (2) munie d'une plaque d'appui (8) qui est fixée sur un support de cabine (9) ayant un joint articulé (19), où ledit support de cabine (9) et ladite plaque d'appui (8) sont ancrés fun sur l'autre via, dans la direction du véhicule, un joint rigide avant (16) et au moins un joint déformable arrière (17, 18), ladite cabine étant prévue, dans le cas d'une collision dans la direction à partir de l'avant, pour être déplacée vers l'arrière tandis qu'une rotation du support de cabine (9) autour de son joint articulé (19) et une déformation du au moins à un joint déformable arrière (17, 18) ont lieu, lequel joint déformable arrière comporte un boulon (35, 36) qui est fixé sur ledit support de cabine (9), et qui passe à travers une traversée (47, 48) agencée dans une zone déformable (66) de ladite plaque d'appui (8), où la géométrie de la traversée (47, 48) est telle qu'elle fixe ledit boulon (35, 36) dans une direction radiale (69) perpendiculairement à un axe longitudinal (67) à travers le boulon (47, 48), où ledit boulon (35, 36) a une saillie (68) qui appuie contre ladite zone déformable de la plaque (8) pour fixer la plaque d'appui (8) le long de l'axe longitudinal du boulon, **caractérisé en ce que** ladite traversée (47, 48) a une zone de bord (50) avec des parties centrales (51 à 53) qui définissent un cercle inscrit (57) ayant un diamètre correspondant sensiblement au diamètre du boulon, et des parties périphériques (54 à 56) qui s'étendent radialement à l'extérieur desdites parties centrales.

2. Véhicule selon la revendication 1, **caractérisé en ce que** le support de cabine (9) est, via son joint articulé (19), fixé d'une manière articulée à une première extrémité (21) d'un bras de liaison (20), dont l'autre extrémité (22) est, dans un second joint articulé (23), fixée d'une manière articulée sur ledit châssis (3), une inclinaison de la cabine (2) étant permise tandis que ledit bras de liaison (2) tourne dudit second joint articulé (23).

3. Véhicule selon la revendication 1 ou 2, **caractérisé en ce que** lesdites parties périphériques (54 à 56) ont une étendue radiale qui est plus petite que le rayon d'une surface de contact (61) de ladite saillie (68) dirigée vers ladite plaque d'appui (8).

4. Véhicule selon la revendication 1, 2 ou 3, **caractérisé en ce que** ladite zone de bord (50) est formée par un cercle intérieur (57) qui est pénétré par plusieurs empreintes (58 à 60).

5. Véhicule selon la revendication 4, **caractérisé en ce que** lesdites empreintes (58 à 60) ont une périphérie (70) qui est constituée d'une demi-partie ou d'une partie plus petite d'un arc circulaire.

6. Véhicule selon la revendication 4 ou 5, **caractérisé en ce que** le nombre d'empreintes est de trois.

7. Véhicule selon l'une quelconque des revendications 1 à 6, **caractérisé en ce que** la traversée (47, 48) est sensiblement en forme de trèfle à trois feuilles.

8. Véhicule selon la revendication 6 ou 7, dans lequel lesdites parties périphériques sont inscrites dans un triangle (62), et ladite plaque d'appui (8) a une ligne de pliage (12) qui sépare une partie sensiblement verticale (11) et une partie sensiblement horizontale (10), où la partie horizontale (10) comporte ladite traversée (47, 48), **caractérisé en ce que** ledit triangle (62, 63) a une surface de base (64, 65) qui est dirigée vers ladite ligne de pliage (12), et qui est agencée sensiblement parallèle à la ligne de pliage (12).

9. Véhicule selon l'une quelconque des revendications 1 à 8, **caractérisé en ce que** le support de cabine (9) et la plaque d'appui (8) sont ancrés l'un sur l'autre via deux joints déformables arrière (17, 18).

10. Véhicule selon la revendication 9, **caractérisé en ce que** ladite plaque d'appui (8) a une nervure (14) s'étendant sensiblement dans la direction transversale du véhicule, et positionnée dans la direction longitudinale du véhicule entre lesdits deux joints déformables arrière (17, 18), une propagation de fissure entre les traversées (47, 48) assignées auxdits joints déformables étant empêchée.

11. Structure de déformation comportant un support rigide (9) et un boulon (35, 36) qui est fixé sur ledit support (9), et qui passe à travers une traversée (47, 48) agencée dans une plaque déformable (8), où la géométrie de la traversée (47, 48) est telle qu'elle fixe ledit boulon (35, 36) dans une direction radiale perpendiculairement à un axe longitudinal à travers le boulon, où ledit boulon (35, 36) a une saillie (68) qui appuie contre ladite plaque (8) pour fixer la plaque dans la direction axiale, **caractérisée en ce que** ladite traversée (47, 48) a une zone de bord (50) ayant des parties centrales (51 à 53) qui définissent un cercle inscrit (57) ayant un diamètre correspondant sensiblement au diamètre du boulon, et des parties périphériques (54 à 56) qui s'étendent radialement à l'extérieur desdites parties centrales.

12. Structure de déformation selon la revendication 11, **caractérisée en ce que** lesdites parties périphériques (54 à 56) ont une étendue radiale qui est plus petite que le rayon d'une surface de contact (61) de ladite saillie dirigée vers ladite plaque.

13. Structure de déformation selon la revendication 11 ou 12, **caractérisée en ce que** ladite zone de bord (50) est formée par un cercle intérieur qui est pénétré par plusieurs empreintes (58 à 60).

14. Structure de déformation selon la revendication 13, **caractérisée en ce que** lesdites empreintes (58 à 60) ont une périphérie qui est constituée de la moitié ou d'une plus petite partie d'un arc circulaire.

15. Structure de déformation selon la revendication 13 ou 14, **caractérisée en ce que** le nombre d'empreintes est de trois.

16. Structure de déformation selon l'une quelconque des revendications 11 à 15, **caractérisée en ce que** la traversée (47, 48) est sensiblement en forme de trèfle à trois feuilles.
